# EUROPEAN PATENT APPLICATION

(11) **EP 2 034 704 A1**
(43) Date of publication of application: **11.03.2009**
(21) Application number: 08250217.0
(22) Date of filing: 17.01.2008
(51) Int. Cl.: H04M 1/60, H04R 5/033

(54) **Multifunctional bluetooth headset**

(30) Priority: 06.09.2007 TW 96214989 U
(71) Applicant: Aiptek International Inc., Hsin-Chu (TW)
(72) Inventor: Lin, Lien-Chen, Jhubei City, Hsinchu County 302 (TW)
(74) Representative: Pratt, David Martin

(57) **Abstract**

The present invention provides a multifunctional Bluetooth headset. The multifunctional Bluetooth headset of the present invention includes a built-in earphone, a Bluetooth module, a connection port, a power module, a codec module, an extended earphone, an audio wire and a wire collector. The Bluetooth module supports at least one advanced audio distribution profile (A2DP) so as to receive and transmit a stereo sound wireless signal in compliance with the Bluetooth specification. The Bluetooth module can detect voltage of the connection port and allow the multifunctional Bluetooth headset to automatically switch to be reset as a Bluetooth dongle. The connection port and other peripherals allow the power module to charge. The extended earphone can incorporate with the built-in earphone as a dual channel earphone capable of playing stereo sound signals supported by the A2DP. The wire collector can collect the audio wire collected within the multifunctional Bluetooth headset.

## Description

### BACKGROUND OF INVENTION

### 1. FIELD OF THE INVENTION

The present invention relates to a multifunctional Bluetooth headset. Particularly, the present invention relates to a Bluetooth headset having an extended earphone capable of playing stereo sound in a dual channel supported by A2DP The Bluetooth headset of the present invention detects the change in voltage on the connection port thereof to determine if it is connected to an external device; if so, the Bluetooth headset is automatically switched to be reset as a Bluetooth transceiver.

### 2. DESCRIPTION OF THE PRIOR ART

The conventional Bluetooth wireless technology is commonly adopted in mobile phones supporting Bluetooth transmission. A user of the Bluetooth headset is provided with wireless transmission for voice data within a particular area through the communication between the Bluetooth headset and the mobile phone. Therefore, as long as devices are equipped with a Bluetooth module, even if these devices are different types of devices, such as electronic devices, mobile phones and computer peripheral devices, they can communicate with each other within a particular distance and perform wireless communication on data and signals. The so-called Bluetooth technology is a globally used wireless communication standard, operated between 2.4GHz∼2.480Ghz of the Industrial Science Medical (ISM) band that requires no license.

Currently, not all computer hosts are necessarily equipped with the Bluetooth technology. Except a few high-end notebook computers that are supported with the Bluetooth transmission service, for performing data transmission and exchange with other devices of different types, most of the computers require to be connected with a firmware of a Bluetooth dongle that has a universal serial bus (USB) on the host thereof.

Most Bluetooth headsets on the market provide mono system for mobile communication. These headsets are mostly for being worn at unilateral ears. The hardware and built-in Bluetooth module cannot support advanced audio distribution profile (A2DP) and thus cannot support a dual channel audio output. The so-called A2DP, simply put, is for the stereo sound of music. The A2DP is the protocol to stream two devices supporting Bluetooth audio transmission, such as a cellular phone and an earphone, thereby transmitting and real time playing high quality music of stereo system through the Bluetooth technology.

Therefore, headsets that do not support A2DP can only output audio quality equivalent to conventional phones (8 bits, 8 kHz). With the A2DP function and a two-ear piece as a play source, audio quality equivalent to stereo music on CD (16 bits, 44.1 kHz) can then be presented, thereby transmitting and real time playing high quality stereo music through the Bluetooth technology. However, besides supporting Bluetooth mobile phones, current Bluetooth headsets on the market cannot act as a Bluetooth transceiver for being used by other computer hosts; as a result, the adoption of Bluetooth headset is greatly limited. There is a need to improve in this area of art.

### SUMMARY OF INVENTION

One object of the present invention is to provide a multifunctional Bluetooth headset, determining whether a connection with an external device exists by detecting a voltage on a connection port thereof. If so, the Bluetooth headset is switched to be a Bluetooth transceiver.

Another object of the present invention is to provide a multifunctional Bluetooth headset having an extended earphone that is a dual channel earphone capable of playing stereo audio signals supported by A2DP and a wire collector so as to collect an audio wire connected with the extended earphone within the Bluetooth headset.

In order to achieve the aforementioned objects, the present invention provides a multifunctional Bluetooth headset which includes a built-in earphone, a Bluetooth module, a connection port, a power module, a codec module, an extended earphone, an audio wire and a wire collector. The Bluetooth module supports at least one advanced audio distribution profile (A2DP) so as to receive and transmit a stereo sound wireless signal in compliance with the Bluetooth specification. The Bluetooth module can detect voltage of the connection port and allow the multifunctional Bluetooth headset to automatically switch to be reset as a Bluetooth dongle. The connection port and other peripherals allow the power module to charge. The extended earphone can incorporate with the built-in earphone as a dual channel earphone capable of playing stereo sound signals supported by the A2DP. The wire collector can collect the audio wire collected within the multifunctional Bluetooth headset.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is a structural view of the multifunctional Bluetooth headset in accordance with the present invention;
Fig. 2 is a flow chart of the multifunctional Bluetooth headset in accordance with the present invention;
Fig. 3 is a cross-sectional view of the multifunctional Bluetooth headset in accordance with the present invention;
Fig. 4 is a partial cross-sectional view of the multifunctional Bluetooth headset in accordance with the present invention;
Fig. 5 is a schematic view of the multifunctional Bluetooth headset in use in accordance with the present invention;
Fig. 6 is a circuit diagram of an embodiment of the codec module shown in Fig. 1;
Fig. 7 is a circuit diagram of an embodiment of the Bluetooth module shown in Fig. 1;
Fig. 8 is a circuit diagram of an embodiment of the built-in earphone and the extended earphone shown in Fig. 1;
Fig. 9 is a circuit diagram of an embodiment of the connection port shown in Fig. 1;
Fig. 10 is a circuit diagram of an embodiment of the power module shown in Fig. 1;
Fig. 11 is a circuit diagram of an embodiment of the microphone shown in Fig. 1.

### DETAILED DESCRIPTION

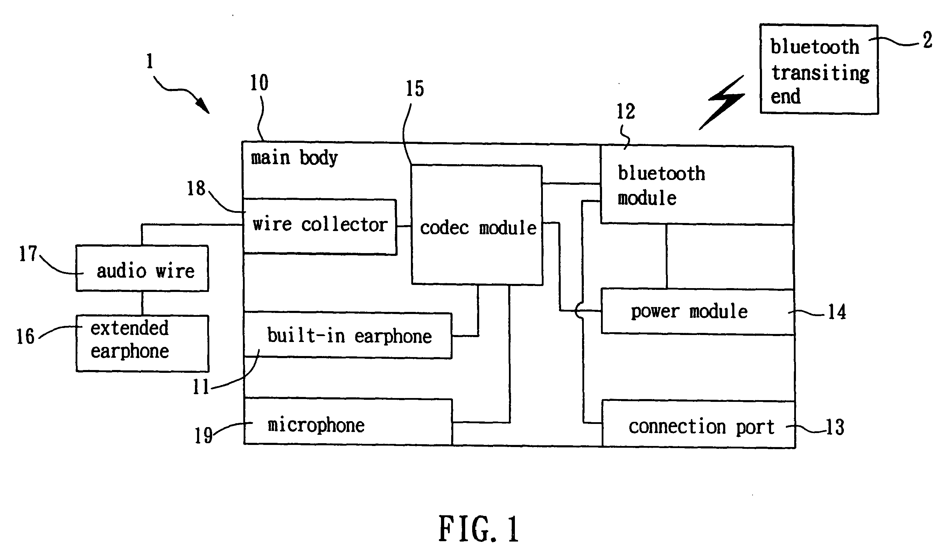

Refer to Fig. 1, which illustrates a structural view of the multifunctional Bluetooth headset in accordance with the present invention. As shown in Fig. 1, the multifunctional Bluetooth headset 1 includes a main body 10, a built-in earphone 11, a Bluetooth module 12, a connection port 13, a power module 14, a codec module 15, an extended earphone 16, an audio wire 17, a wire collector 18 and a microphone 19. The multifunctional Bluetooth headset 1 can communicate with at least one Bluetooth transiting end 2 and transmit digital data.

The main body 10 may be a hallow housing. The built-in earphone 11 outputting an audio signal is directly affixed to the main body 10.

The Bluetooth module 12 is connected to the codec module 15, the connection port 13 and the power module 14. Additionally, the transmission protocol that the Bluetooth module 12 supports includes at least Advanced Audio Distribution Profile (A2DP), HeadSet Profile (HSP), and HandFree Profile (HFP). Since the Bluetooth module 12 supporting the transmission protocols is well known in the art and is available in the market, detailed description thereof will not be described herein.

The connection port 13 provides a connection between the Bluetooth module 12 and a peripheral device having the same communication interface. The connection port 13 can also charge the power module 14 when connected to the peripheral device. The connection port 13 may be a USB port or a mini USB port and connected to the Bluetooth module 12. The power module 14 can be any one of the following: a lithium battery, a nickel-metal hydride battery, an oxyride battery, a carbon-zinc battery, a nickel cadmium battery, a fuel battery, and a rechargeable battery.

The codec module 15 is connected to the built-in earphone 11, the extended earphone 16, the Bluetooth module 12, and the power module 14, respectively, such that the digital audio data of the Bluetooth module 12 may be decoded to analog signals and then transmitted to the built-in earphone 11 and the extended earphone 16 for playing. Additionally, the Bluetooth module 12 may determine whether there is a connection to an external device by detecting a change of voltage at the connection port 13. If the connection port 13 is not connected to the external device, which means there's no voltage signal from the connection port 13, then the Bluetooth headset 1 of the present invention functions as the conventional Bluetooth headset, namely to decode the digital audio data from the Bluetooth module 12 to the analog signals and then transmit the data to the built-in earphone 11 and the extended earphone 16 for playing. However, if the connection port 13 is connected electrically to the external device, then the Bluetooth module 12 will receive a voltage signal of +5V from the connection port 13, i.e. the input voltage of the USB specification. Thus, the Bluetooth module 12 automatically switches to function as a Bluetooth dongle (ie., Bluetooth transceiver). In the Bluetooth dongle mode, the multifunctional Bluetooth headset 1 may be connected to an external device through the connection port 13 by a cable for data transmission. The Bluetooth module 12 may receive the digital signals from the connection port 13, process the data signal and then send the processed data to an external Bluetooth device through Bluetooth wireless signals. On the other hand, the Bluetooth module 12 may also receive the Bluetooth wireless signals sent from another external Bluetooth device and then send them to the external device through the connection port 13. In other words, in the Bluetooth dongle mode, the multifunctional Bluetooth headset 1 of the present invention may become a Bluetooth transceiver of the external device so as to perform the Bluetooth wireless signal transmission with another external Bluetooth device.

The extended earphone 16 may output audio signals and couple electrically to the codec module 15 through the audio wire 17. The audio wire 17 may be flexibly collected by the wire collector 18 and hidden within the main body 10. The stereo audio signal of the A2DP received by the Bluetooth module 12 may be played by the built-in earphone 11 via the codec module 15 simultaneously such that the extended earphone 16 and the built-in earphone 11 form a dual-channel stereo sound.

The microphone 19 is connected to the codec module 15 so as to transmit audio signals. In a preferred embodiment of the present invention, the microphone 19 is for recording external sound through the codec module and transmitting it to a corresponding Bluetooth transiting end 2 through the Bluetooth module 12.

The Bluetooth transiting end 2 (Bluetooth transceiver) may be an external electronic device capable of transmitting or receiving Bluetooth signals, and may be any one of the following Bluetooth devices: a computer with a built-in Bluetooth module, a Bluetooth cellular phone, a personal digital assistant with a built-in Bluetooth module, an information appliance with a built-in Bluetooth module and another Bluetooth headset device.

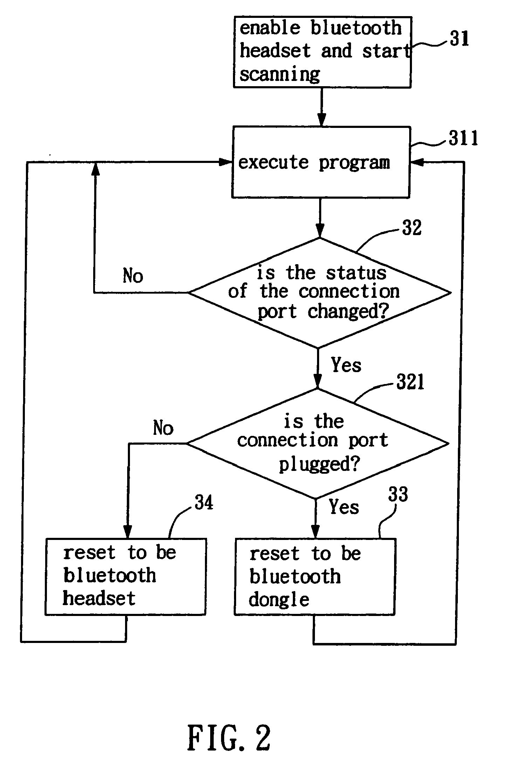

Refer to Fig. 2, which illustrates the flow chart of the multifunctional Bluetooth headset in accordance with the present invention. As shown in Fig. 2, the multifunctional Bluetooth headset of the present invention includes the following steps:
Step 31: providing a multifunctional Bluetooth headset and enabling it so as to utilize the Bluetooth technology to scan for a corresponding Bluetooth transiting end;
Step 311: executing the built-in program of the multifunctional Bluetooth headset so as to function as a Bluetooth headset or a Bluetooth dongle;
Step 32: determining whether the status of the connection port of the multifunctional Bluetooth headset is changed by detecting a change of voltage at the connection port; if the status remains the same, then performing step 311; if the status is changed, then performing step 321;
Step 321: determining whether the connection port of the multifunctional Bluetooth headset is plugged; if the connection port is not connected, then performing step 34; if it is connected, then performing step 33;
Step 33: switching to reset the multifunctional Bluetooth headset as a Bluetooth dongle and starting to perform the program of the Bluetooth dongle by connecting the connection port with the external communication interface such as USB and charging a built-in power module at the same time, and performing step 311;
Step 34: switching to reset the multifunctional Bluetooth headset as a Bluetooth headset supporting mono and stereo sounds simultaneously and performing the play function of the Bluetooth headset.

In addition to the stereo sound supported by the A2DP, the multifunctional Bluetooth headset 1 further supports HSP protocol and HFP protocol so as to work as a conventional Bluetooth headset in conjunction with the wireless Bluetooth cellular phone. The afore-mentioned HFP protocol is well known in the art of wireless Bluetooth cellular phone and wireless receiving technology, and thus will not be described in detail hereinafter.

When the connection port 13 and the external peripheral device are connected, the Bluetooth module 12 of the multifunctional Bluetooth headset 1 determines whether the connection port 13 of the multifunctional Bluetooth headset 1 is plugged after the determination on voltage change is made. The Bluetooth module 12 is then switched to be reset as the Bluetooth dongle so as to provide the peripheral device without Bluetooth transmission technology with communication and data transmission through the built-in Bluetooth module 12 of the multifunctional Bluetooth headset 1.

When the multifunctional Bluetooth headset 1 of the present invention is not used with the built-in earphone 11 to play, the Bluetooth module 12 detects the connection status of the connection port 13 and switches to reset as the Bluetooth dongle of the multifunctional Bluetooth headset 1. Through the connection with the connection port 13, other peripheral devices are provided with communication and wireless data transmission through the Bluetooth module 12 of the multifunctional Bluetooth headset 1. The connection port 13 in the multifunctional Bluetooth headset 1 may be a mini USB port connected to the peripheral devices such as personal computers, notebooks, PDAs through a connection wire; at the same time, the power module 14 within the multifunctional Bluetooth headset 1 may be charged when the connection port 13 and the other peripheral devices are connected.

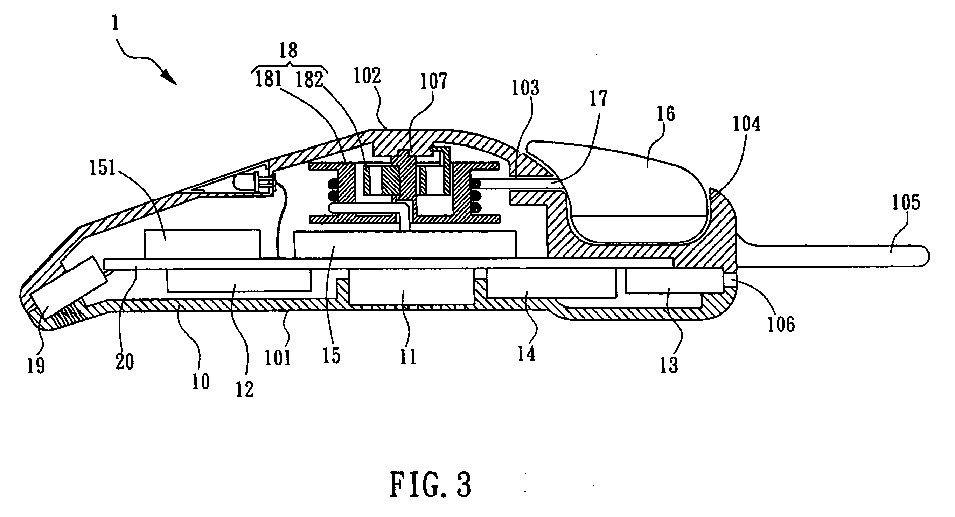

Refer to Fig. 3, which illustrates a cross-sectional view of the multifunctional Bluetooth headset in accordance with the present invention. As shown in Fig. 3, the main body 10 of the multifunctional Bluetooth headset 1 further includes an inner surface 101 and an outer surface 102. The wire collector 18 is provided in a predefined area at the inner rim of the main body 10. The wire collector 18 further includes a roller 181 and a flexible element 182. The outer surface 102 of the main body 10 is provided with a through hole 103 at a predetermined area, and a connection base 104 corresponding to the through hole 103 on the outer surface 102 is provided such that the extended earphone 16 can be connected to the connection base 104. The audio wire 17 connected to one end of the extended earphone 16 enters the main body 10 through the through hole 103, thereby the audio wire 17 is collected on the roller 181 of the wire collector 18. The other end of the audio wire 17 is connected to the codec module 15.

The built-in earphone 11, the Bluetooth module 12, the connection port 13, the power module 14, the codec module 15, the audio wire 17 and the microphone 19 may be integrated on a substrate 20 so as to be electrically coupled to the substrate 20, respectively. The substrate 20 is connected to the main body 10 at a predetermined area therein. The built-in earphone 11 is located corresponding to the inner surface 102 in the main body 10. An ear hanging portion 105 extended out of the main body 10 allows the built-in earphone 11 to be substantially close to the outer ear when the user wears one of the auricles of the multifunctional Bluetooth headset 1.

The microphone 19 is provided at an appropriate location on the same inner surface 101 on the built-in earphone 11; in other words, the microphone 19 is provided at a location relatively closer to the user's mouth or vocal cord so as to communicate in conjunction with the built-in earphone 11 and the Bluetooth transiting end 2, such as a Bluetooth cellular phone. Audio signals may be transmitted or received through the Bluetooth module 12 such that when in the Bluetooth communication position, HSP and HFP are utilized to transmit audio signals. Thus, in order to allow users to utilize the communication in safety, the built-in earphone 11 is allowed to play audio signals only as a mono sound, and thus the users may use another ear to receive signals from the external device.

A connecting hole 106 is provided at a predetermined location on the main body 10. The connecting hole 106 substantially corresponds to the connection port 13 on the substrate 20 such that the connection port 13 in the connecting hole 106 may allow the multifunctional Bluetooth headset 1 to connect with the peripheral devices having the same communication interface. Therefore, the multifunctional Bluetooth headset 1 becomes a Bluetooth dongle extended at the peripheral device, and at the same time charges the power module 14.

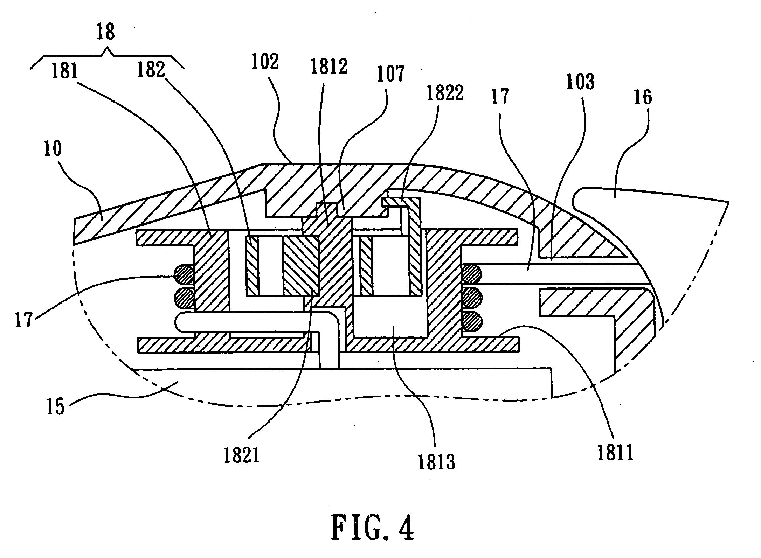

Refer to Fig. 4, which illustrates a cross-sectional view of the multifunctional Bluetooth headset in accordance with the present invention. As shown in Fig. 4, the roller 181 is in a wheel shape with a ring-shape concave rail 1811 provided on a surface thereof. An opening of the ring-shape concave rail 1811 substantially corresponds to the through hole 103 of the main body 10 so as to contain the audio wire 17 within the ring-shape concave rail 1811. A central axis 1812 is provided in the center of the roller 181. The central axis 1812 is pivotally connected to a rotation base 107 in the inner side of the main body 10 so as to allow the roller 181 to rotate smoothly at the rotation base 107.

A concave groove 1813 is provided around the central axis 1812 of the roller 181 and contains the flexible element 182 therein. In a preferred embodiment of the present invention, the flexible element 182 is a spiral spring having one combining end thereof affixed to the central axis 1812 of the roller 181 and an opposite fixed end 1822 thereof affixed to the inner side of the main body 10.

When the user takes out the extended earphone 16 from the connection base 104, the extended earphone 16 immediately pulls the audio wire 17 surrounding the roller 181 out of the main body 10 along the through hole 103 so as to provide an additional audio channel corresponding to the built-in earphone 11. In other words, at the other ear of the user not wearing the multifunctional Bluetooth headset 1, the extended earphone 16 pulls the audio wire 17 for an appropriate distance so as to be plugged in that other ear and use in conjunction with the built-in earphone 11 as a dual channel headset capable of playing stereo sound supported by the A2DP simultaneously. Of course, the Bluetooth transiting end 2 must also support the A2DP. After the Bluetooth technology is scanned, the multifunctional Bluetooth headset 1 is allowed to receive digital music, such as an MP3 signal so as to become a substantial stereo headset for both ears.

As the audio wire 17 is pulled, the flexible element 182 affixed within the concave groove 1813 of the roller 181 is in a curved and flexibly tense position, indirectly allowing the main body 10 and the extended earphone 16 to maintain a restoring force. When the extended earphone 16 leaves the ear of the user, the roller 181 may collect the audio wire 17 thereon around the ring-shape concave rail 1811 of the roller 181 through the through hole 101 by the flexible restoring force of the flexible element 182. As a result, the extended earphone 16 is flexibly restored within the connection base 104 so as to achieve the objective of collecting the audio wire 17 within the wire collector 18 and hiding within the main body 10 of the multifunctional Bluetooth headset 1.

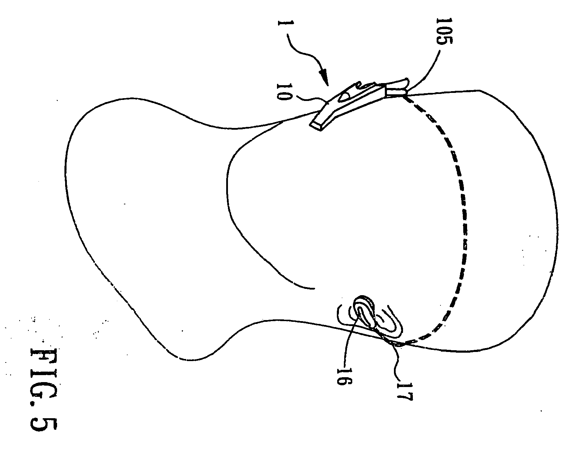

Refer to Fig. 5, which illustrates a schematic view of the multifunctional Bluetooth headset in use in accordance with the present invention. As shown in Fig. 5, the multifunctional Bluetooth headset 1 allows the user to wear the ear hanging portion 105 at a left ear or a right hear. The built-in earphone 11 of the main body 10 is substantially faced toward the ear canal; at the same time the extended earphone 16 may be pulled out from the main body 10 such that the audio wire 17 can reach the other ear along the back of the head so as to be plugged in the ear. A stereo sound for both ears can thus be provided through the multifunctional Bluetooth headset 1.

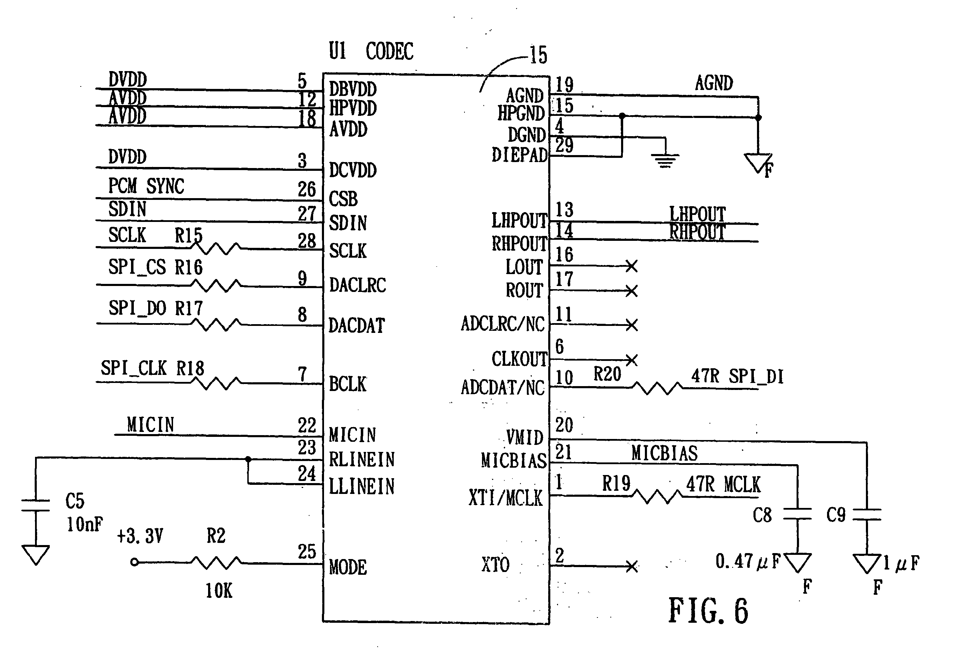

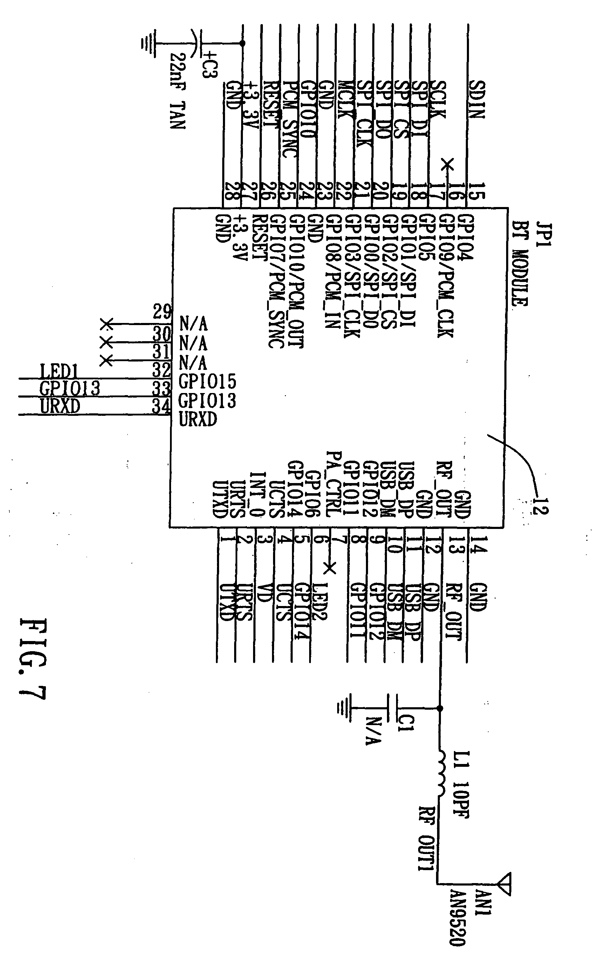

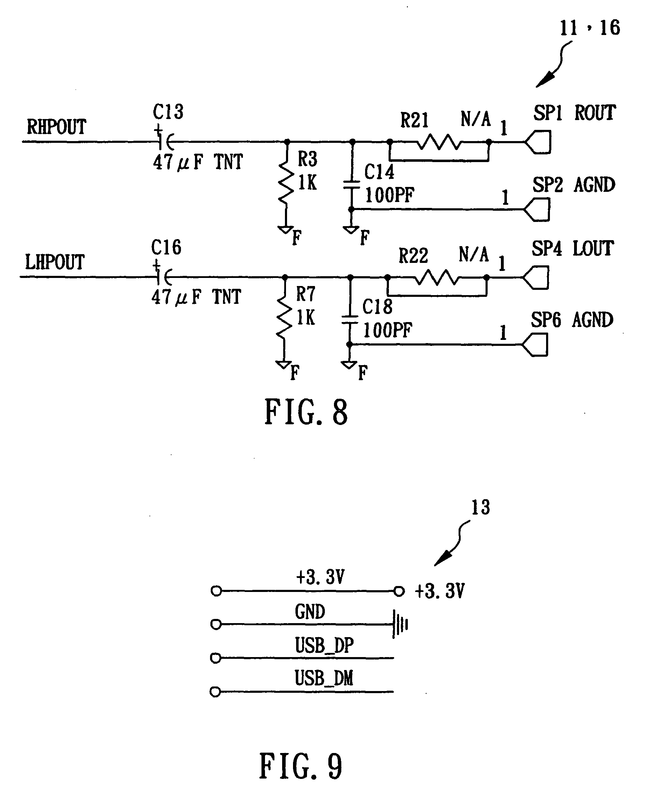

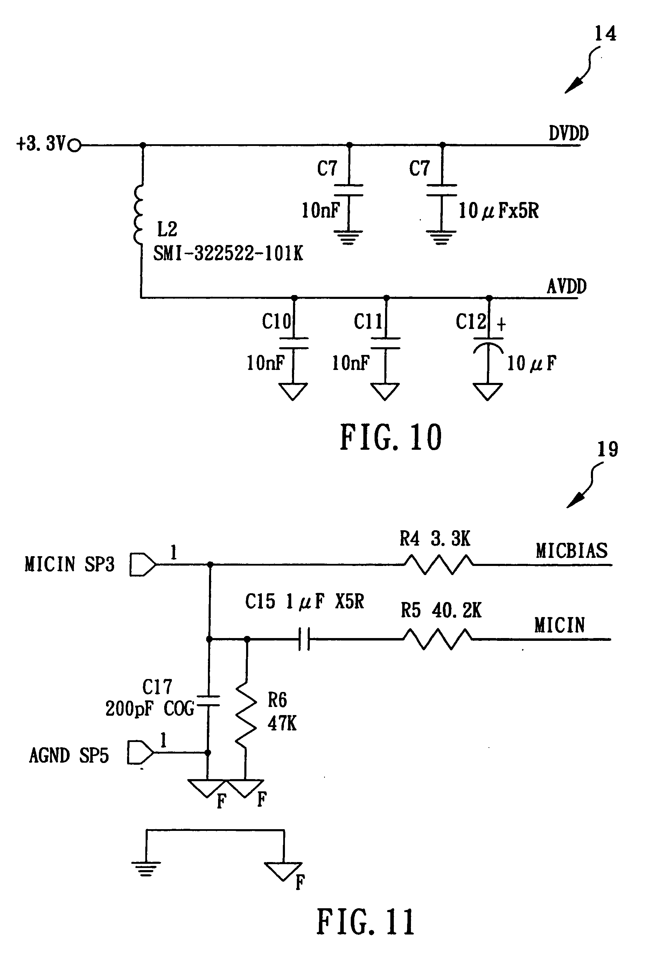

Refer to Figs. 6 to 11, which illustrate the circuit diagrams of the codec module 15, the Bluetooth module 12, the built-in earphone 11, the extended earphone 16, the connection port 13, the power module 14 and the microphone 19 within the multifunctional Bluetooth headset 1 in accordance with the present invention shown in Fig. 1. As shown in Fig. 6, an embodiment of the circuit diagram of the codec module 15 in accordance with the present invention may be a single IC packaged element available on the market. As shown in Fig. 7, an embodiment of the circuit diagram of the Bluetooth module 12 in accordance with the present invention may be a single IC packaged element available on the market. Wherein, the pins SCLK, SDIN, PCM_SYNC, MCLK of the codec module 15 and the Bluetooth module 12 are connected to each other. Fig. 8 shows a circuit diagram of an embodiment of the built-in earphone 11 and the extended earphone 16 in accordance with the present invention, wherein the pins RHPOUT and LHPOUT are connected to the corresponding pins of the codec module 15. Fig. 9 illustrates a circuit diagram of an embodiment of the connection port 13 in accordance with the present invention, wherein the pins +3.3V, GND, USB_DP and USB_DM are connected to the corresponding pins of the Bluetooth module 12, respectively, for power supply, voltage detection and signal transmission. The power terminal +3.3V and the ground terminal GND are connected to the codec module 15. Fig. 10 illustrates a circuit diagram of an embodiment of the power module 14 in accordance with the present invention, wherein the pins DVDD and AVDD are connected to the corresponding pings of the codec module 15, respectively, and the pin +3.3V of the Bluetooth module 12 as well as the power terminal of +3.3V of the power module 14 are connected to a battery and the connection port 13. Fig. 11 illustrates a circuit diagram of an embodiment of the microphone 19 in accordance with the present invention, wherein the pins MICIN and MICBIAS are connected to the corresponding pins of the codec module 15, respectively.

In summary, the multifunctional Bluetooth headset 1 of the present invention includes a main body 10, a built-in earphone 11, a Bluetooth module 12, a connection port 13, a power module 14, a codec module 15, an extended earphone 16, an audio wire 17, a wire collector 18 and a microphone 19. The Bluetooth module 12 supports at least an advanced audio distribution profile (A2DP) so as to transmit and receive the stereo sound wireless signal in compliance with the Bluetooth specification. The Bluetooth module 12 determines a connection with a peripheral device based on detection on a voltage change of the connection port 13. Meanwhile, the multifunctional Bluetooth headset 1 may be automatically switched to be a Bluetooth dongle so as to provide applications to the peripheral devices. The peripheral devices connected to the connection port 13 may also charge the power module 14 therethrough.

The extended earphone 16 may be used in conjunction with the built-in earphone 11 to become a dual channel headset supporting stereo sound in compliance with the A2DP. The wire collector 18 may collect the audio wire 17 within the main body 10 of the multifunctional Bluetooth headset 1.

The present invention has been described with a preferred embodiment thereof and it is understood that many changes and modifications to the described embodiment can be carried out without departing from the scope and the spirit of the invention that is intended to be limited only by the appended claims.

## Claims

1. A multifunctional Bluetooth headset, used in conjunction with a Bluetooth transiting end to retrieve data, said multifunctional Bluetooth headset comprising:
a main body being a hallow housing;
a built-in earphone provided on said main body so as to play audio signals;
a Bluetooth module receiving and transmitting wireless signals in compliance with a Bluetooth specification;
a connection port providing an interface to connect to an external device and the Bluetooth module;
a power module providing power; and
a codec module connecting to said built-in earphone, said Bluetooth module and said power module; wherein said codec module performs at least one of a Bluetooth headset function and a Bluetooth dongle function; said Bluetooth module determines a connection with said external device by detecting a voltage change of said connection port; when said connection port is connected to said external device, said Bluetooth module automatically switches to said Bluetooth dongle function.

2. The multifunctional Bluetooth headset of claim 1, wherein said connection port is either a USB port or a mini USB port.

3. The multifunctional Bluetooth headset of claim 1, further comprising a microphone connected to said codec module.

4. The multifunctional Bluetooth headset of claim 1, further comprising an extended earphone for playing audio signal in conjunction with said built-in earphone.

5. The multifunctional Bluetooth headset of claim 4, further comprising a wire collector provided within said main body so as to flexibly collect an audio wire connected to said extended earphone.

6. The multifunctional Bluetooth headset of claim 5, wherein said wire collector further comprises:
a roller pivotally connected to a predetermined location within an inner rim of said main body; and
a flexibly element having one combining end thereof affixed to said roller and an opposite fixed end thereof affixed to said inner rim of said main body;
wherein, said roller collects said audio wire on said roller through said flexible element.

7. The multifunctional Bluetooth headset of claim 1, wherein said Bluetooth transiting end is any one of the following devices: a computer with a built-in Bluetooth module, a Bluetooth cellular phone, a personal digital assistant with a built-in Bluetooth module, an information appliance with a built-in Bluetooth module, and another Bluetooth headset device.

8. A multifunctional Bluetooth headset, used in conjunction with a Bluetooth transiting end to retrieve data, said multifunctional Bluetooth headset, comprising:
a main body being a hallow housing;
a built-in earphone provided on said main body so as to play audio signals;
a Bluetooth module supporting at least an advanced audio distribution profile (A2DP) so as to transmit and receive wireless signals in compliance with a Bluetooth specification;
an extended earphone playing audio signals in conjunction with said built-in earphone so as to provide a stereo sound;
a wire collector provided within said main body, for collecting an audio wire connected to said extended earphone so as to collect said audio wire within said Bluetooth headset;
a power module providing power;
a connection port providing an interface to connect to an external device and the Bluetooth module; and
a codec module connected to said built-in earphone, said Bluetooth module, said extended earphone, and said power module.

9. The multifunctional Bluetooth headset of claim 8, further comprising a microphone connected to said codec module; wherein said codec module performs at least one of a Bluetooth headset function and a Bluetooth dongle function; said Bluetooth module determines a connection with said external device by detecting a voltage change of said connection port; when said connection port is connected to said external device, said Bluetooth module automatically switches to said Bluetooth dongle function..

10. The multifunctional Bluetooth headset of claim 8, wherein said wire collector further comprises:
a roller pivotally connected to a predetermined location within an inner rim of said main body; and
a flexibly element having one combining end thereof affixed to said roller and an opposite fixed end thereof affixed to said inner rim of said main body;
wherein, said roller collects said audio wire on said roller through said flexible element.
